Europäisches Patentamt

European Patent Office

Office européen des brevets

(11) Publication number: **0 074 753**
**B1**

(12) EUROPEAN PATENT SPECIFICATION

(45) Date of publication of patent specification: **24.04.85**      (51) Int. Cl.⁴: **B 60 R 1/06**

(21) Application number: **82304585.1**

(22) Date of filing: **01.09.82**

(54) **Rear-view mirror for motor vehicles.**

(30) Priority: **05.09.81 GB 8126936**

(43) Date of publication of application:
**23.03.83 Bulletin 83/12**

(45) Publication of the grant of the patent:
**24.04.85 Bulletin 85/17**

(84) Designated Contracting States:
**DE FR GB**

(56) References cited:
**DE-A-2 431 735**
**DE-B-2 453 053**
**DE-B-2 721 004**
**US-A-4 279 473**

(73) Proprietor: **BRITAX (WINGARD) LIMITED**
**Chandler Road**
**Chichester Sussex, PO19 2UG (GB)**

(72) Inventor: **Cunningham, Douglas James**
**"Sambourne" 4 Church Close Dunton Bassett**
**Lutterworth Leicestershire (GB)**
Inventor: **Boddy, Ian**
**9 Green Court Drive**
**Bognor Regis West Sussex (GB)**

(74) Representative: **Hollinghurst, Antony**
**Britax Central Services 40 Granby Avenue**
**Garretts Green Birmingham, B33 OSJ (GB)**

Courier Press, Leamington Spa, England.

## Description

This invention relates to an exterior rear-view mirror for a vehicle which is adjustable from the interior of the vehicle.

Exterior rear-view mirrors which are adjustable from the interior of the vehicle are generally of two types. One type has a housing which is fixed relative to the vehicle and a mirror of which the orientation is adjustable relative to the housing. In the other type, the orientation of the housing is adjustable and the mirror is fixed therein. The present invention is concerned with a mirror of the latter type. Such as is shown in DE—A—2431735, which discloses a mirror in accordance with the pre-characterising part of claim 1.

According to the invention, an exterior rear-view mirror for a vehicle comprises a bracket adapted to be secured to the vehicle and having a portion with a part-spherical outer surface, a mirror housing, an intermediate member connected to the mirror housing and having a part-spherical surface of the same radius as and opposite curvature to the part-spherical surface of the bracket so as to engage therewith and a side portion projecting laterally from said part-spherical surface, resilient means for applying a radial compressive force to retain said part-spherical surfaces in mutual engagement, guide means fast with the bracket for constraining a first part of said side portion to remain in a fixed plane, and actuating means in engagement with a second part of said side portion and operative to cause displacement of said second part both in a direction parallel to said fixed plane and in a direction perpendicular thereto, the centre of the part-spherical surface of the intermediate member being off-set from an imaginary straight line between said first and second parts thereof.

Thus, if the mirror is mounted on a vehicle with said fixed plane substantially horizontal, displacement of the second part of the intermediate member in such plane causes lateral adjustment of the mirror while displacement thereof in a direction perpendicular thereto causes vertical adjustment of the mirror.

The mirror housing may be integral with the intermediate member. However, to enable the mirror to fold back flat against the side of the vehicle if it is struck by an object moving past the vehicle, the mirror housing preferably has a portion with a part-spherical outer surface in engagement with a part-spherical surface on the intermediate member with the same radius but opposite curvature. This permits angular movement of the mirror housing relative to the intermediate member about an axis perpendicular to the aforesaid fixed plane.

An embodiment of the invention will now be described by way of example with reference to the accompanying drawings in which:

Figure 1 is a transverse cross-sectional view of a rear-view mirror assembly in accordance with the invention, and

Figure 2 is a plan view of the mirror assembly shown in Figure 1 with a top cover removed.

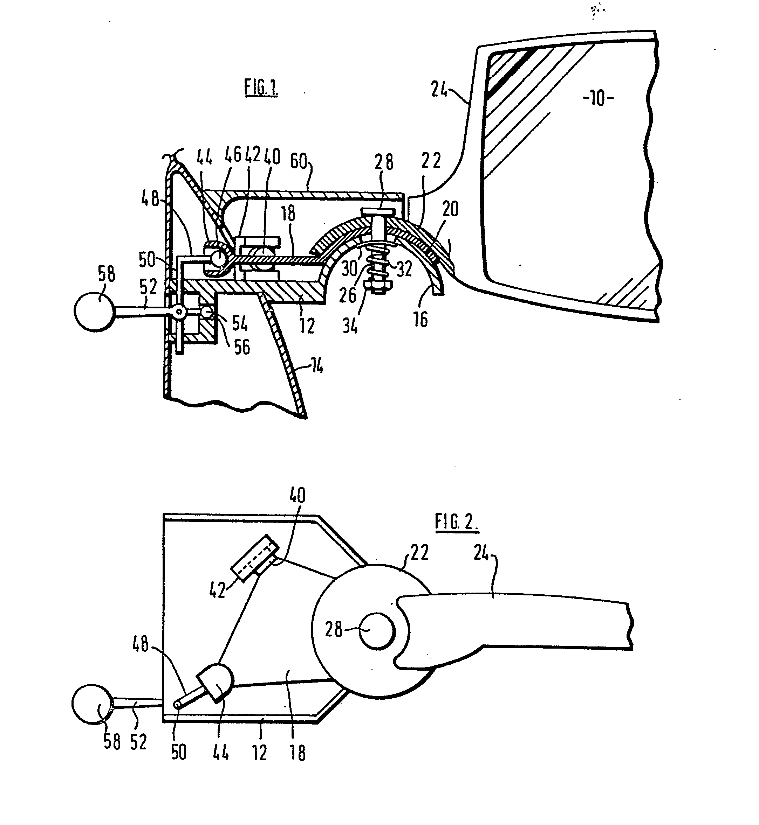

Referring to Figure 1, a rear view mirror 10 has a bracket 12 mounted so as to project horizontally from the body 14 of a vehicle. The bracket 12 has a part-spherical portion 16 with a concave upper surface.

An intermediate member 18 has a part-spherical portion 20, the concave surface of which engages with the upper convex surface of the portion 16 of the bracket 12. The upper convex surface of the part-spherical portion 20 of the intermediate member 18 engages with a concave projection 22 forming part of the housing 24 of the mirror 10. A bolt 26 extends through three abutting members 16, 20 and 22 with its head resting on the upper surface of the projection 22. The hole in the portion 16 of the bracket 12 is over-size so as to permit limited radial movement of the intermediate member 18 and the housing 24 relative thereto, as well as angular movement about the axis of the bolt 26. Below the member 16, the bolt 26 carries a part-spherical washer 30 which is biased upwardly by a spring 32 so as to maintain the various part-spherical surfaces in engagement with one another, a nut 34 against which the spring 32 abuts, permitting the friction between these surfaces to be adjusted as desired.

The rest of the intermediate member 18 projects from the part-spherical portion 20 thereof in a plane generally perpendicular to the axis of the bolt 26. As can best be seen from Figure 2, one corner of the projecting part of the intermediate member 18 carries a cylindrical protuberance 40 which engages in a horizontal channel in a guide member 42 which is secured to the bracket 12. Thus movement of this corner of the intermediate member 18 out of a horizontal plane is inhibited by the guide member 42 while angular movement about the bolt 28 is permitted.

The other corner of the projecting portion of the intermediate member 18 carries a socket 44 of a ball-and-socket coupling. The ball 46 of this coupling is mounted on the end of an arm 48 which projects radially from a vertical rod 50 which is journaled in bearings in the bracket 12 for both axial and angular movement relative to its longitudinal axis which is vertical. An operating lever 52 is pivotally coupled to the rod 50 for movement about a horizontal axis. One end of the lever 52 carries a ball 54 which is received in a horizontal guide channel 56 secured to the mounting bracket 12. The other end of the lever 52 projects into the inside of the vehicle and carries an operating knob 58.

In use, when it is desired to adjust the angle of the mirror 10 in the horizontal direction, the knob 58 is moved horizontally. This rotates the rod 50 about its axis so that the arm 48 causes a corresponding angular movement of the intermediate member 18, about the axis of the bolt 26, relative to the bracket 12. Frictional engagement between the upper surface of the part-spherical portion 20 of the intermediate member and the lower part-spherical surface of the projection 22 of the mirror housing 24 results in the latter moving with the intermediate member 18.

When the mirror 10 is to be adjusted in the vertical direction, the knob 58 is moved vertically. The engagement of the ball 54 on the other end of the lever 52 in the channel 56 has the result that the rod 50 also moves vertically, carrying the socket 44 with it. Consequently, the intermediate member 18 performs an angular movement about a horizontal axis through the cylindrical member 40 (which is constrained by the channel in the member 42) and the centre of curvature of the various part-spherical surfaces. This angular movement causes vertical adjustment of the mirror 10.

Should the mirror housing 24 be subject to impact in the horizontal direction, the part-spherical projection 22 thereof moves about the axis of the bolt 26 relative to the intermediate member 18 through a sufficient angle to enable the mirror housing 24 to be folded flat against the side of the vehicle.

In Figure 1 a cover 60 is shown extending from the vehicle body 14 to the mirror housing 24. This cover 60 is omitted from Figure 2 to enable the intermediate member 18 to be seen.

### Claims

1. An exterior rear-view mirror for a vehicle comprising a bracket (12) adapted to be secured to the vehicle and having a portion (16) with a part-spherical outer surface, and a mirror housing (24), an intermediate member (18) connected to the mirror housing (24) and having a part-spherical surface (20) of the same radius as and opposite curvature to the part-spherical surface (16) of the bracket so as to engage therewith and resilient means (32) for applying a radial compressive force to retain said part-spherical surfaces in mutual engagement characterised by said intermediate member (18) having a side portion projecting laterally from said part-spherical surface, by guide means (42) fast with the bracket (12) for constraining a first part (40) of said side portion to remain in a fixed plane, and by actuating means (46) in engagement with a second part (44) of said side portion and operative to cause displacement of said second part (44) both in a direction parallel to said fixed plane and in a direction perpendicular thereto, the centre of curvature of the part-spherical surface of the intermediate member (18) being off-set from an imaginary straight line between said first and second parts 40 and 44 thereof.

2. A mirror according to claim 1, characterised in that the actuating means comprises a knob (46) mounted on one end of a lever (48) and the second part (44) of the side portion comprises a socket for receiving the knob (46).

3. A mirror according to claim 2, characterised in that the other end of the lever (48) is secured to a first member (50) which is pivotable about an axis perpendicular to the lever (48) and movable along said pivot axis.

4. A mirror according to claim 3, characterised by a second lever (52) pivotally coupled, at an intermediate point along its length, to the pivot member (50) for angular movement about an axis perpendicular to the pivot axis of the member (50), one end of the second lever being received in a guide extending in a plane perpendicular to the pivot axis of the member (50) and the other end being arranged for manual actuation.

5. A mirror according to claim 1, 2 or 3, characterised in that the intermediate member (18) has a second part-spherical surface concentric with the first-mentioned part-spherical surface (20) and the housing (24) has a part spherical surface (22) of the same radius and opposite curvature, and the resilient means (32) is arranged to apply a radial compressive force between the part-spherical surface (22) of the housing and the part-spherical surface of the portion (16) of the bracket.

### Revendications

1. Rétroviseur extérieur pour véhicule comprenant une console (12) agencée pour être fixée au véhicule et ayant une portion (16) à surface externe à partie sphérique, un boîtier (24) de miroir, un élément intermédiaire (18) reliée au boîtier (24), de miroir et ayant une surface (20) à partie sphérique de même rayon et de courbure opposée à la surface (16) à partie sphérique de la console pour venir au contact de celle-ci et un moyen élastique (32) pour appliquer une force de compression radiale pour retenir lesdites surfaces à partie sphérique en contact mutuel, caractérisé en ce que ledit élément intermédiaire (18) présente ue portion latérale faisant saillie latéralement de la surface à partie sphérique, en ce que des moyens de guidage (42) sont fixés à la console (12) pour contraindre une première partie (40) de ladite portion latérale à rester dans un plan fixe et en ce qu'il comprend un moyen d'actionnement (46) en contact avec une seconde partie (44) de ladite portion latérale et agissant pour provoquer le déplacement de ladite seconde partie (44) tant dans une direction parallèle audit plan fixe que dans une direction perpendiculaire à celui-ci, le centre de courbure de la surface à partie sphérique de l'élément intermédiaire (18) étant décalé à partir d'une ligne droite imaginaire entre ladite première partie (40) et ladite seconde partie (44) de celui-ci.

2. Rétroviseur selon la revendication 1, caractérisé en ce que le moyen d'actionnement comprend un bouton (46) monté sur une extrémité d'un levier (48) et la seconde partie (44) de la portion latérale comprend une douille pour recevoir le bouton (46).

3. Rétroviseur selon la revendication 2, caractérisé en ce que l'autre extrémité du levier (48) est fixée à un premier élement (50) qui est susceptible de pivoter autour d'un axe perpendiculaire au levier (48) et de se déplacer le long dudit axe de pivotement.

4. Rétroviseur selon la revendication 3, caractérisé en ce qu'il présente un second levier (52) articulé en un point intermédiaire sur sa longueur à l'élément (50) en vue d'un mouvement angulaire autour d'un axe perpendiculaire à l'axe de pivotement de l'élément (50) une extrémité du second levier étant reçue dans un guide s'étendant de l'élément (50), l'autre extrémité étant adaptée pour un actionnement manuel.

5. Rétroviseur selon l'une quelconque des revendications 1 à 3, caractérisé en ce que l'élément intermédiaire (18) présente une seconde surface à partie sphérique concentrique à la première surface mentionnée à partie sphérique et le boîtier (24) présente une surface à partie sphérique (22) de même rayon et de courbure opposée, le moyen élastique (32) étant agencé pour appliquer une force de compression radiale entre la surface à partie sphérique (22) du boîtier et la surface à partie sphérique de la portion (16) de la console.

**Patentansprüche**

1. Außenrückspiegel für ein Fahrzeug mit einer am Fahrzeug zu befestigenden Halterung (12), die ein Teil (16) mit einer kugelteilförmigen Außenfläche aufweist, und einem Spiegelgehäuse (24), einem mit dem Spiegelgehäuse (24) verbunden Zwischenteil (18) mit einer kugelteilförmigen Fläche (20) mit gleichem Radius wie die kugelteilförmige Fläche (16) der Halterung, jedoch mit entgegengesetzter Krümmung, un mit ihr in Eingriff zu treten, und Federmittel (32) zum Aufbringen einer radialen Druckkraft, un die kugelteilförmigen Flächen in gegenseitigem Eingriff zu halten, gekennzeichnet durch einen sich seitlich von der kugelteilförmigen Fläche des Zwischenteils (18) erstreckenden Abschnitt, fest mit der Halterung (12) ausgebildete Führungsmittel (42) zur Begrenzung eines ersten Teils (40) des Seitenteils zum Verbleib in einer festen Ebene, und durch mit einem zweiten Teil (44) des Seitenteils in Eingriff stehende Stellmittel (46), die zur Bewirkung einer Verschiebung des zweiten Teils (44) sowohl in einer Richtung parallel zur festen Ebene und in einer Richtung senkrecht dazu dienen, wobei der Krümmungsmittelpunkt der kugelteilförmigen Fläche des Zwischenteils (18) von einer imaginären geraden Linie zwischen dem ersten und dem zweiten Teil (40, 44) davon versetzt ist.

2. Außenrückspiegel nach Anspruch 1, dadurch gekennzeichnet, daß das Stellmittel einen an einem Ende eines Hebels (48) befstigten Knopf (46), und das zweite Teil (44) des Seitenteils eine Pfanne zur Aufnahme des Knopfes (46) umfaßt.

3. Außenrückspiegel nach Anspruch 2, dadurch gekennzeichnet, daß das andere Ende des Hebels (48) an einem ersten, um eine senkrecht zum Hebel (48) verlaufende Achse schwenkbaren und längs der Schwenkachse bewegbaren Teil (50) befestigt ist.

4. Außenrückspiegel nach Anspruch 3, dadurch gekennzeichnet, daß ein zweiter Hebel (52) an einem mittleren Punkt längs seiner Länge schwenkbar mit dem Schwenkteil (50) für eine winklige Bewegung un eine Achse senkrecht zur Schwenkachse des Teils (50) verbunden ist, wobei ein Ende des zweiten Hebels in einer Ebene senkrecht zur Schwenkachse des Teils (50) erstreckenden Führung aufgenommen wird und das andere Ende zur Handverstellung angeordnet ist.

5. Außenrückspiegel nach Anspruch 1, 2 oder 3, dadurch gekennzeichnet, daß das Zwischenteil (18) eine zweite kugelteilförmige, konzentrisch zur ersten kugelteilförmigen Fläche (20) verlaufende Fläche, und das Gehäuse (24) eine kugelteilförmige Fläche (22) mit gleichem Radius, jedoch mit entgegengesetzter Krümmung aufweist, und daß Federmittel (32) angeordnet sind, um eine radiale Druckkraft zwischen der kugelteilförmigen Fläche (22) des Gehäuses und der kugelteilförmigen Fläche des Teils (16) der Halterung aufzubringen.

FIG. 1.

FIG. 2.